# EUROPÄISCHE PATENTANMELDUNG

(11) **EP 1 531 430 A1**
(43) Veröffentlichungstag der Anmeldung: **18.05.2005**
(21) Anmeldenummer: 04026372.5
(22) Anmeldetag: 05.11.2004
(51) Int. Cl.: G07C 5/08

(54) **Fahrerassistenzsystem zur Unterstützung der Spurhaltung eines Kraftfahrzeuges und Vorrichtung zum Betreiben eines Fahrerassistenzsystems**

(30) Priorität: 13.11.2003 DE 10352966
(71) Anmelder: AUDI AG, 85045 Ingolstadt (DE)
(72) Erfinder: Buschardt, Boris, Dr., 85049 Ingolstadt (DE)
(74) Vertreter: Thielmann, Frank

(57) **Zusammenfassung**

Die Erfindung betrifft ein Fahrerassistenzsystem, das dadurch gekennzeichnet ist, dass Angaben über den Zustand des Fahrerassistenzsystems in eine Speichervorrichtung (2) eingeschrieben werden und zusätzlich der Zustand von zumindest einer Schutzvorrichtung (3) in dem Kraftfahrzeug überwacht wird. Die Erfindung betrifft weiterhin eine Vorrichtung zum Betreiben eines Fahrerassistenzsystems für Kraftfahrzeuge, die dadurch gekennzeichnet ist, dass diese zumindest eine Speichervorrichtung (2) zur Speicherung des Zustands des Fahrerassistenzsystems aufweist und die Speichervorrichtung (2) mit einer Schutzvorrichtung (3) in dem Kraftfahrzeug verbunden ist.

## Beschreibung

Die Erfindung betrifft ein Fahrerassistenzsystem zur Unterstützung der Spurhaltung eines Kraftfahrzeugs sowie eine Vorrichtung zum Betreiben eines Fahrerassistenzsystems.

Zur Steigerung der Sicherheit und des Fahrkomforts bei Kraftfahrzeugen werden in modernen Fahrzeugen Fahrerassistenzsysteme integriert. Diese können zur Unterstützung des Fahrers, zur Information des Fahrers und/oder zur Warnung des Fahrers dienen. Eines dieser Fahrerassistenzsysteme ist ein sogenanntes Lane-Departure-Waming-System (LDW-System), das zur Unterstützung der Spurhaltung dient und den Fahrer durch Warnung an einem ungewollten Verlassen der Fahrspur hindern soll. Bei diesen Systemen werden dem Fahrer bei einer Gefahrensituation, d.h. bei einer Annäherung an eine Fahrspurbegrenzung, Warnungen in Form von akustischen, haptischen und/oder optischen Warnsignalen übermittelt oder Gegenmaßnahmen eingeleitet.

Die Warnungen werden hierbei in der Regel entweder in Abhängigkeit von der vorausberechneten Zeit oder der verbleibenden seitlichen Wegstrecke bis zum Überfahren der Fahrspurmarkierung ausgelöst. Weiterhin kann die Warnung des LDW-Systems bei dem Vorliegen bestimmter Bedingungen unterdrückt oder abgebrochen werden. Eine solche Unterdrückung oder ein solcher Abbruch erfolgt bislang bei Situationen, in denen die Bestimmung eines ungewollten Verlassens der Fahrspur aufgrund von Umgebungsbedingungen nicht oder nur schwierig möglich ist, z.B. wenn die Fahrspurerkennung zu schlecht ist, die Spurbreite zu niedrig oder zu hoch ist, die Spurkrümmung bzw. der Kurvenradius zu eng oder zu weit ist. Auch in Fällen, in denen die Geschwindigkeit des Fahrzeugs zu niedrig oder zu hoch ist, kann die Warnfunktion des LDW-Systems abgebrochen werden. Schließlich erfolgt die Warnung nicht, wenn der Fahrer lenkt, bremst oder den Blinker betätigt.

Diese Systeme geben bereits eine gewisse Sicherheit, die aber nicht allen Situationen gerecht werden kann. Zudem kann es trotz der Warnung durch ein Fahrerassistenzsystem und / oder der Unterdrückung der Warnung zu Unfällen kommen. Hierbei kann dem Hersteller des Fahrerassistenzsystems eine Haftung auferlegt werden, wenn die Warnung und/oder Unterdrückung der Warnung nicht gerechtfertigt war.

Aufgabe der vorliegenden Erfindung ist es daher, ein Fahrerassistenzsystem und eine Vorrichtung zum Betreiben eines Fahrerassistenzsystems zu schaffen, die die Überprüfung der Funktionsfähigkeit des Fahrerassistenzsystems, insbesondere die Rechtfertigung der Auslösung und/oder Unterdrückung der Warnung im Falle des Eintretens eines Unfalls ermöglichen.

Diese Aufgabe wird erfindungsgemäß gelöst durch ein Fahrerassistenzsystem, das sich dadurch auszeichnet, dass Angaben über den Zustand des Fahrerassistenzsystems in eine Speichervorrichtung eingeschrieben werden und zusätzlich der Zustand von zumindest einer Schutzvorrichtung in dem Kraftfahrzeug überwacht wird.

Ein Fahrerassistenzsystem kann im Sinne dieser Erfindung beispielsweise ein Fahrerassistenzsystem zur Unterstützung der Spurhaltung eines Kraftfahrzeugs, insbesondere ein LDW-System oder ein ACC-System zur Unterstützung der Abstandshaltung zu voranfahrenden Fahrzeugen oder ein EPS oder ARS-System sein. Besonders bevorzugt werden hierbei Fahrerassistenzsysteme, bei denen beim Erkennen einer Gefahrensituation eine Warnung an den Fahrer erfolgt. Die Warnung kann in Form eines akustischen, haptischen und/oder optischen Warnsignals oder in Form der Einleitung von Gegenmaßnahmen erfolgen. Als Gefahrensituation kann beispielsweise das Erreichen der Fahrbahnbegrenzung bzw. das Überfahren der Fahrbahnbegrenzungsmarkierung oder das Annähern an ein voranfahrenes Fahrzeug bezeichnet werden. Eine Warnung, die aufgrund der Ermittlung des Eintritts der Gefahrensituation in Abhängigkeit der verbleibenden Zeit bis zum Eintritt der Gefahrensituation erfolgt, wird im Sinne dieser Erfindung als zeitabhängige Warnung bezeichnet, und eine Warnung, die aufgrund der Ermittlung des Eintritts der Gefahrensituation in Abhängigkeit von der verbleibenden Wegstrecke zu dem Ort der Gefahrensituation erfolgt, wird als ortsabhängige Warnung bezeichnet. Die verbleibende Zeit und die verbleibende Wegstrecke werden im Sinne der Erfindung als Warngrößen bezeichnet.

Durch Speichern von Angaben über dien Zustand des Fahrerassistenzsystems können diese für eine spätere Überprüfung verfügbar gemacht werden. Die Überwachung des Zustands zumindest einer Schutzvorrichtung kann weiterhin dazu dienen, den Zeitpunkt des Eintritts eines Unfalls zu ermitteln.

Gemäß einer Ausführungsform wird die Abhängigkeit der Angaben über den Zustand des Fahrerassistenzsystems und der Schutzvorrichtung so gewählt, dass Angaben über den Zustand der Schutzvorrichtung zur Steuerung des Einschreibens des Zustands des Fahrerassistenzsystems in die Speichervorrichtung verwendet werden.

Aufgrund des Zustands der Schutzvorrichtung kann beispielsweise ein Einschreiben des Zustands des Fahrerassistenzsystems abgebrochen werden.
Insbesondere kann beim Erkennen eines vorbestimmten Zustands der Schutzvorrichtung das Einschreiben der Angaben über den Zustand des Fahrerassistenzsystems in die Speichervorrichtung unterbrochen werden.

Vorzugsweise wird als vorbestimmter Zustand der Schutzvorrichtung das Aktivieren der Schutzvorrichtung verwendet. Die Schutzvorrichtung kann beispielsweise den Airbag oder den Gurtstraffer des Fahrzeugs darstellen. Diese Schutzvorrichtungen werden aktiviert, wenn die Bedingungen den Eintritt eines Unfalls andeuten. Daher kann der Aktivierungszustand dieser Vorrichtungen einen zuverlässige Hinweis auf das Eintreten eines Unfalls darstellen. Wird das Einschreiben des Zustands des Fahrerassistenzsystems in Abhängigkeit dieses Aktivierungszustands abgebrochen, kann sichergestellt werden, dass die Angaben über das Fahrerassistenzsystem vor dem Unfall aufgezeichnet werden.

Alternativ oder zusätzlich können die Angaben über den Zustand der Schutzvorrichtung in die Speichervorrichtung eingeschrieben werden. Durch das Festhalten dieses Zeitpunkts, der in der Regel mit dem Zeitpunkt eines Unfalls zusammenfällt, kann eine spätere Korrelation zwischen einem Zustand des Fahrerassistenzsystems und dem Unfall hergestellt werden.

In einer Ausführungsform werden die Angaben über den Zustand des Fahrerassistenzsystems in vorbestimmten Abständen mit aktuellen Angaben über den Zustand des Fahrerassistenzsystems überschrieben. Hierdurch kann der Bedarf an Speicherplatz begrenzt werden und dennoch können stets die letzten Informationen über das Fahrerassistenzsystem und gegebenenfalls die Schutzvorrichtung auch im Falle eines Unfalls bereitgestellt werden.

Die Angaben über den Zustand des Fahrerassistenzsystems, die in die Speichervorrichtung eingeschrieben werden, können zumindest die Angaben über die Aktivierung und/oder Unterdrückung einer Warnung umfassen. Diese Angaben erlauben später einen Rückschluss darauf, ob das Fahrerassistenzsystem funktionsfähig war und ob der Unfall gegebenenfalls durch eine Warnung und/oder eine Unterdrückung der Warnung hervorgerufen wurde.

In einer weiteren Ausführungsform dient das Fahrerassistenzsystem zur Unterstützung der Spurhaltung. Insbesondere bei solchen Fahrerassistenzsystemen könnte der Fahrer, der mit dem System vertraut ist, in Situationen, in denen er mit einer Warnung rechnet oder eine Warnung nicht vermutet, durch Fehlwarnungen oder ein versehentliches Unterdrücken einer Warnung irritiert werden und ein Unfall kann so hervorgerufen werden.

Gemäß einem weiteren Aspekt wird die Aufgabe, die der Erfindung zugrunde liegt, gelöst durch eine Vorrichtung zum Betreiben eines Fahrerassistenzsystems für Kraftfahrzeuge, wobei diese zumindest eine Speichervorrichtung zur Speicherung des Zustands des Fahrerassistenzsystems aufweist und die Speichervorrichtung mit einer Schutzvorrichtung in dem Kraftfahrzeug verbunden ist.

Über die Verbindung wird die Kommunikation zwischen der Schutzvorrichtung und dem Fahrerassistenzsystem auf direkte Weise oder indirekte Weise ermöglicht.

Bei einer indirekten Verbindung kann die Verbindung mit der Schutzvorrichtung beispielweise über zumindest eine Steuereinheit verlaufen. Hierzu kann in der Verbindung zwischen dem Fahrerassistenzsystem und der Schutzvorrichtung eine Steuereinheit vorgesehen sein. In dieser Steuereinheit können die Angaben über den Zustand der Schutzvorrichtung ausgewertet werden und entsprechende Signale an das Fahrerassistenzsystem übertragen werden. Aufgrund dieser Signale kann beispielsweise das Einschreiben von Angaben über den Zustand des Fahrerassistenzsystems gestoppt werden. In diesem Fall dient die Verbindung zu der Schutzvorrichtung der Steuerung des Einschreibens von Angaben über den Zustand des Fahrerassistenzsystems in die Speichervorrichtung. Eine Steuereinheit kann beispielsweise das Steuergerät der Schutzvorrichtung sein oder eine zentrale Steuervorrichtung des Fahrerassistenzsystems.

Eine direkte Verbindung zu der Schutzvorrichtung kann hingegen dem Einschreiben von Angaben über den Zustand der Schutzvorrichtung in die Speichervorrichtung dienen.

In einer Ausführungsform ist die Speichervorrichtung ein von dem Fahrerassistenzsystem separates Bauteil, das zumindest eine Schnittstelle zum Auslesen der gespeicherten Daten aufweist. Hierdurch kann nach einem Unfall lediglich die Speichervorrichtung geborgen werden und die darin gespeicherten Daten können ausgelesen werden. Ein Ausbauen der gesamten Bestandteile des Fahrerassistenzsystems ist bei dieser Ausführungsform nicht notwendig. Weiterhin kann ein Gehäuse für die Speichervorrichtung mit zusätzlichen Sicherheitsvorrichtungen, wie beispielsweise einer Stoßdämmung, versehen sein.

Die Speichervorrichtung ist vorzugsweise wiederbeschreibbar. Hierdurch kann der benötigte Speicherplatz begrenzt werden.

Die Schutzvorrichtung, deren Zustand überwacht wird und die mit dem Fahrerassistenzsystem verbunden ist, kann einen Airbag des Kraftfahrzeugs darstellen. Es können auch andere Schutzvorrichtungen verwendet werden, wobei diese vorzugsweise ebenfalls beim Eintritt eines Unfalls aktiviert werden oder zumindest ihren Betriebszustand ändern.

Als Fahrerassistenzsystem wird vorzugsweise ein Fahrerassistenzsystem verwendet, das der Unterstützung der Spurhaltung dient.

Merkmale und Vorteile, die bezüglich des Fahrerassistenzsystems beschrieben werden, gelten - sofern anwendbar - auch für die Vorrichtung und umgekehrt.

Die Erfindung wird im Folgenden anhand der beiliegenden Figuren erläutert, wobei:
Figur 1: eine schematische Blockdarstellung einer Ausführungsform einer Vorrichtung zum Betreiben eines Fahrerassistenzsystems zeigt; und
Figur 2: eine schematische Blockdarstellung einer weiteren Ausführungsform einer Vorrichtung zum Betreiben eines Fahrerassistenzsystems zeigt.

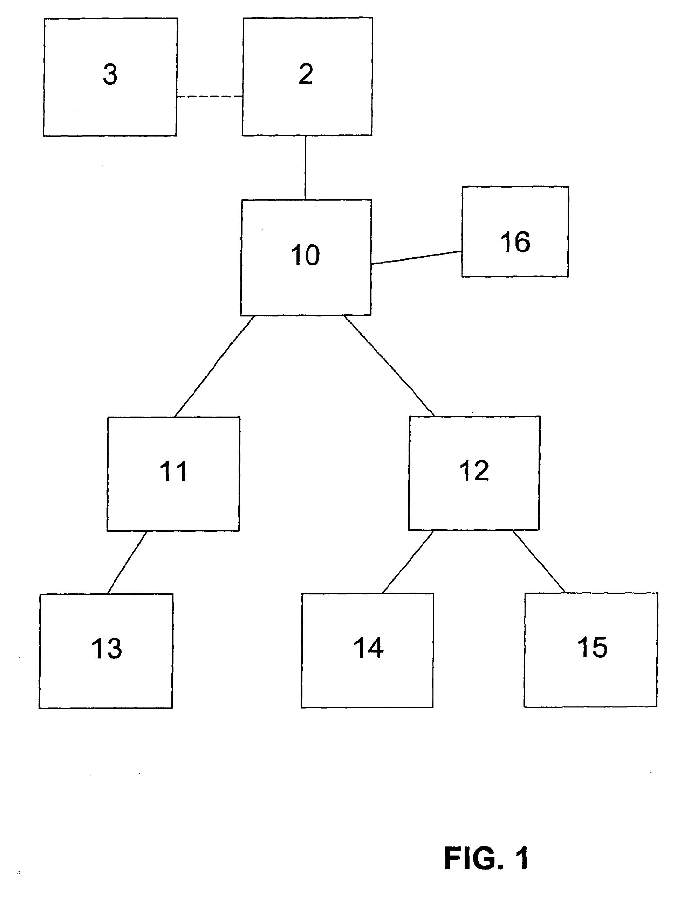

In Figur 1 ist schematisch eine Ausführungsform einer Vorrichtung zum Betreiben eines Fahrerassistenzsystems dargestellt. Das Fahrerassistenzsystem ist in der dargestellten Ausführungsform ein LDW-System. Die Vorrichtung umfasst in der dargestellten Ausführungsform eine Zentraleinheit 10, eine Einheit 11 zur Bestimmung des Eintritts einer Gefahrensituation in Abhängigkeit der verbleibenden Zeit, eine Einheit 12 zur Bestimmung des Eintritts einer Gefahrensituation in Abhängigkeit der verbleibenden seitlichen Wegstrecke zu dem Ort der Gefahrensituation, eine Anzahl von Erfassungseinrichtungen 13, 14, 15 und 16, sowie eine Speichervorrichtung 2. Die Erfassungseinrichtungen 13, 14, 15 und 16 können beispielsweise Sensoren oder andere Messvorrichtungen darstellen. Weiterhin ist das Fahrerassistenzsystem 1 mit einer Schutzvorrichtung 3 verbunden. Diese kann beispielsweise einen Airbag in dem Kraftfahrzeug darstellen.

Über die Erfassungseinrichtung 13 können in der dargestellten Ausführungsform die Daten erfasst werden, die zur Bestimmung des Gierwinkelfehlers des Kraftfahrzeugs oder der Driftgeschwindigkeit des Fahrzeugs relativ zu der Fahrspurbegrenzung notwendig sind. Diese Daten werden an die Einheit 11 übermittelt, in der daraus die verbleibende Zeit bis zum Eintritt der Gefahrensituation, d.h. bis zum Verlassen der Spur bzw. Überfahren der Spurbegrenzung, bestimmt wird.

Weiterhin werden in der dargestellten Ausführungsform von den Erfassungseinrichtungen 14 und 15 die Daten erfasst, die für die Bestimmung des Abstands zu der Spurbegrenzung, d.h. der verbleibenden seitlichen Wegstrecke zu dem Ort der Gefahrensituation, notwendig sind. Diese Daten werden an die Einheit 12 übermittelt, in der die verbleibende seitliche Wegstrecke bis zum Eintritt der Gefahrensituation, d.h. bis zum Verlassen der Spur oder Überfahren der Spurbegrenzung, bestimmt wird.

Die Daten über die verbleibende Zeit und die verbleibende Strecke werden an die Zentraleinheit 10 übermittelt, in der diese mit Schwellwerten verglichen werden. Die Schwellwerte werden in der Zentraleinheit 10 eingestellt. Hierzu können Angaben oder Daten weiterer Erfassungsvorrichtungen 16 oder aber auch der Erfassungsvorrichtungen 13, 14 und 15, die für die Einheiten 11 und 12 verwendet werden, benutzt werden. Die von den Einheiten 11 und 12 zur Verfügung gestellten Daten werden mit denen der Schwellwerte verglichen, wobei stets eine Annäherung von oben an den Schwellwert erfolgt, d.h. die Schwellwerte stellen Minimalwerte dar.

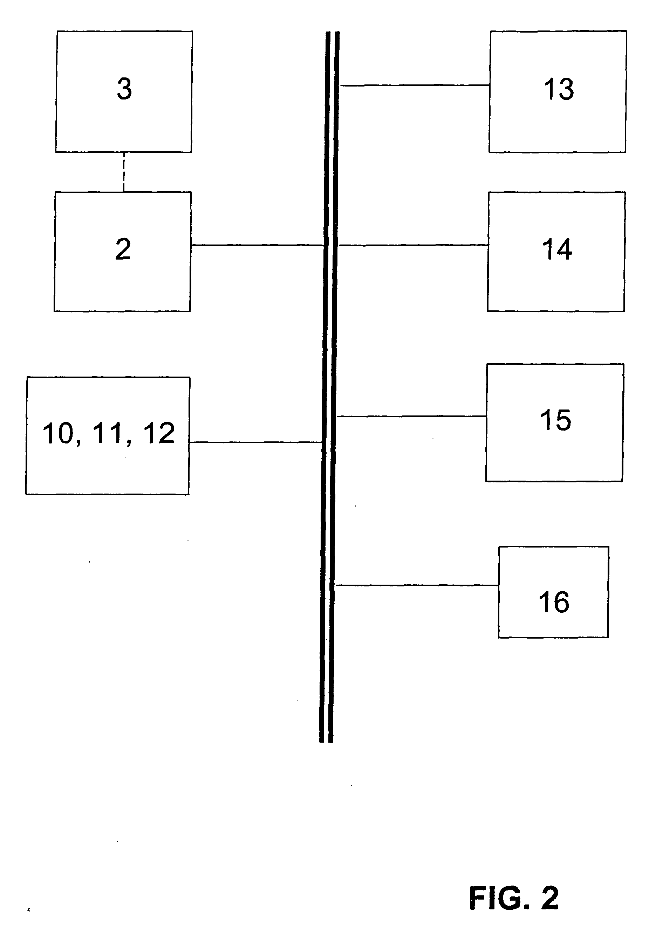

Die Einheiten 11 und 12 können durch Softwareprogramme innerhalb der Zentraleinheit 10 realisiert sein. Weiterhin kann, wie in Figur 2 schematisch dargestellt, die Verbindung zwischen den einzelnen Erfassungsvorrichtungen 13 bis 16 und den einzelnen Einheiten über einen gemeinsamen Datenbus, zum Beispiel den CAN-Bus realisiert sein, wodurch die Angaben und Daten der einzelnen Erfassungsvorrichtungen allen Einheiten 10, 11 und 12 zur Verfügung gestellt werden können. Auch die Schutzvorrichtung 3 oder ein damit verbundenes Steuergerät kann mit dem Datenbus verbunden sein.

Die Funktionsweise einer Ausführungsform des LDW-Systems gemäß der vorliegenden Erfindung wird im Folgenden beispielhaft beschrieben.

Die Schritte, die während des Betriebs des LDW-Systems durchgeführt werden, müssen nicht in der angegebenen Reihenfolge erfolgen. Im wesentlichen werden von dem LDW-System die folgenden Aktionen ausgeführt:
- Erfassung von Daten und Angaben für die Bestimmung des Eintritts einer Gefahrensituation, für die Einstellung des Schwellwerts für die Auslösung der Warnung und für die Unterdrückung der Warnung
- Einstellung des Schwellwerts / der Schwellwerte (falls ortsabhängig und zeitabhängig Ermittlung durchgeführt wird)
- Überprüfung des Erreichens des Schwellwerts zur Auslösung der Warnung
- Überprüfung des Vorliegens von Vermeidungsbedingungen
- Einschreiben der Vermeidungsbedingungen in eine Speichervorrichtung
- Auslösen einer Warnung
- Einschreiben der Wamungsauslösung in die Speichervorrichtung
- Überprüfung des Vorliegens von Unterbrechungsbedingungen
- Einschreiben der Unterbrechung in die Speichervorrichtung
- Überprüfung des Zustands einer Schutzvorrichtung
- Einschreiben des Zustands der Schutzvorrichtung in die Speichervorrichtung oder Steuerung des Einschreibens von Angaben über den Zustand des Fahrerassistenzsystems in die Speichervorrichtung in Abhängigkeit des Zustands der Schutzvorrichtung

Diese Schritte können zum größten Teil simultan durchgeführt werden. Sobald das LDW-System aktiviert wird, werden die Daten und Angaben entweder speziell für das LDW-System erfasst oder von Erfassungsvorrichtungen, beispielsweise über einen Datenbus, zur Verfügung gestellt.

Bei aktiviertem Fahrerassistenzsystem werden ständig die Bedingungen in und um das Fahrzeug erfasst. Hierzu können Sensoren oder andere Messeinrichtungen verwendet werden. Aufgrund der erfassten Daten und Angaben wird der Schwellwert für die Auslösung einer Warnung eingestellt. Die Bedingungen können einzeln oder gemeinsam berücksichtigt werden, wobei einige für eine Seite des Fahrzeugs bzw. der Fahrspur anders als für die andere Seite eingestellt werden können.

Bei der Einstellung des Schwellwerts wird dieser in Abhängigkeit der erfassten Angaben gegenüber einem Normalwert entweder herauf- oder herabgesetzt. Der Normalwert kann in dem Fahrerassistenzsystem fest einprogrammiert sein.

Die folgenden Bedingungen können zum Heraufsetzen des Schwellwerts für die Auslösung der Warnung und damit zu einer frühzeitigen Warnung führen.

Der Fahrer ist müde und hat daher eine längere Reaktionszeit. Die Fahrbahnbegrenzung ist eine durchgezogene Linie bzw. es befinden sich Objekte auf der Nachbarspur bzw. an der Fahrbahngrenze, wie beispielsweise eine Leitplanke, da hierbei das Überfahren der Fahrbahnbegrenzung eine größere Gefahr darstellt, als wenn die Nachbarspur frei ist oder die Fahrbahnbegrenzung eine gestrichelte Linie ist.

Ein Heruntersetzen des Schwellwerts, d.h. eine spätere Warnung, kann bei folgenden Bedingungen vorgenommen werden:
- das Fahrzeug befindet sich auf einer kurvenreichen Strecke - da hier in der Regel die Kurven geschnitten werden und ein frühzeitiges Warnen als störend empfunden würde;
- das Fahrzeug bewegt sich mit hoher Geschwindigkeit - da hier die Fahrer die Tendenz haben, die gesamte Fahrspurbreite auszunutzen;
- das Fahrzeug befindet sich auf einer schmalen Straße - da hier der Raum zwischen den Spurbegrenzungen gering ist.

Diese Bedingungen werden überprüft und entsprechend Ihrer Wichtigkeit bei der Einstellung des Schwellwerts für die Warnung berücksichtigt. Vorzugsweise werden die Bedingungen in Kombination berücksichtigt. So kann zwar ein Fahren auf einer kurvenreichen Strecke in der Regel eine Herabsetzung des Schwellwerts bedingen; ist aber gleichzeitig die Geschwindigkeit des Fahrzeugs niedrig, so kann der Schwellwert dennoch auf ein höheres Niveau eingestellt werden.

Werden für die Auslösung der Warnung unterschiedliche Ermittlungsarten verwendet, wird insbesondere der Eintritt einer Gefahrensituation in Abhängigkeit der verbleibenden Zeit bis zum Überfahren der Fahrbahnbegrenzung und in Abhängigkeit der verbleibenden seitlichen Wegstrecke ermittelt, so werden für diese unterschiedlichen Ermittlungsarten unterschiedliche Schwellwerte eingestellt. Die Schwellwerte für die beiden Ermittlungsarten werden ebenfalls unter Berücksichtigung der oben genannten Eingangsgrößen, die die Bedingungen in und um das Fahrzeug betreffen, eingestellt. Allerdings wird hierbei zusätzlich ein Verhältnis zwischen den beiden Schwellwerten berücksichtigt. Vorzugsweise wird der Schwellwert für die zeitabhängige Warnung so eingestellt, dass dieser früher erreicht wird als der Schwellwert für die ortsabhängige Warnung. So kann sichergestellt werden, dass die zeitabhängige Warnung früher anspricht, was zu einer Steigerung der Sicherheit führt. Sollte die zeitabhängige Warnung nicht ansprechen, so wird eine Warnung aufgrund der ortsabhängigen Warnung ausgeführt.

Sobald erkannt wird, dass der oder einer der Schwellwerte erreicht wurde, wird unmittelbar überprüft, ob ein Grund vorliegt, die Warnung zu unterdrücken. Diese Überprüfung kann entfallen, wenn beim Vorliegen eines Unterdrückungsgrunds automatisch die Auslösung von Warnungen blockiert wird.

Gründe für eine Unterdrückung der Warnung, d.h. in diesem Fall der Verhinderung einer Warnung bevor diese ausgelöst wird, können aufgrund zeitlich vorangegangener Geschehnisse oder anstehender Geschehnisse sowie aufgrund von Bedingungen in und um das Fahrzeug bestehen.

Beispielsweise wird eine Warnung unterdrückt, wenn davon auszugehen ist, dass der Fahrer aufmerksam ist. Dies kann durch den Eingriff eines ESP-Systems oder eines ASR-Systems erkannt werden. In Situationen, in denen ein solches System eingreift, treten in der Regel Längs- und Querbeschleunigungen auf, bei denen davon auszugehen ist, dass der Fahrer wach und aufmerksam ist. Zudem sind solche Situationen fahrdynamisch kritisch, so dass der Fahrer nicht zusätzlich durch eine Warnung abgelenkt werden sollte.

Weiterhin kann eine Verhinderung einer Warnung erfolgen, wenn von dem LDW-System innerhalb einer definierten vorausgehenden Zeitspanne eine Warnung ausgegeben wurde. Diese Zeitspanne kann beispielsweise einige Sekunden betragen. Durch diese Unterdrückung kann beispielsweise vermieden werden, dass ein Fahrer durch häufige, direkt aufeinanderfolgende Warnungen irritiert wird, wenn dieser beispielsweise nahe entlang einer Spurbegrenzungslinie fährt. Außerdem ist dieser Unterdrückungsgrund sinnvoll vor dem Hintergrund, dass ein Fahrer in der Regel auf eine Warnung des LDW-Systems reagiert. Diese Reaktion ist meist ein Gegenlenken, d.h. ein Wegsteuern von der Fahrspurbegrenzung, an die er sich zu nahe angenähert hat. Dieses Gegensteuern bewirkt, insbesondere, wenn es zu stark ausgeführt wird, ein sofortiges Annähern an die Spurbegrenzung auf der gegenüberliegenden Seite. Eine erneute Warnung ist aber für diese Annäherung nicht notwendig, da davon auszugehen ist, dass der Fahrer aufgrund der ersten Warnung aufmerksam ist.

Abhängig von dem Unterdrückungsgrund kann mit dem LDW-System auch die Art der Unterdrückung festgelegt werden. So kann beispielsweise die Unterdrückung nur auf Warnungen angewandt werden, die sich auf Gefahrensituationen auf einer Seite des Fahrzeugs bzw. auf eine Fahrspurbegrenzung beziehen.

Eine solche richtungsabhängige Unterdrückung kann beispielsweise bei dem genannten Unterdrückungsgrund einer zuvor ausgelösten Warnung des LDW-Systems sinnvoll sein. Hierbei kann die Unterdrückung sich beispielsweise auf die Gegenseite beschränken, d.h. auf die Seite, die der Seite gegenüberliegt, aufgrund derer die erfolgte Warnung ausgelöst wurde.

Alternativ kann statt der Unterdrückung eine Einstellung eines niedrigeren Schwellwerts vorgenommen werden. Soll beispielsweise die Warnung nur auf einer Seite reduziert werden, so kann für diese Seite der Schwellwert heruntergesetzt werden, wohingegen der Schwellwert für die Gegenseite beibehalten wird. Diese Art der Unterdrückung bringt den Vorteil mit sich, dass, wenn auch spät, in jedem Fall eine Warnung erfolgt. Allerdings sollte diese Art der Unterdrückung nur für solche Unterdrückungsgründe eingesetzt werden, bei denen nicht von einer häufigen Warnung und damit Belästigung des Fahrers auszugehen ist.

Weiterhin kann die Unterdrückung einer Warnung auch selektiv nach der zur Ermittlung der der Warnung zugrunde liegenden Ermittlungswerte verwendeten Ermittlungsart erfolgen. So kann beispielsweise eine Unterdrückung sich ausschließlich auf eine Warnung beziehen, die aufgrund zeitabhängiger Werte ausgelöst werden würde. Damit kann die Warnung, die aufgrund der Time-to-line-Crossing (TLC) Bestimmung ausgegeben würde, unterdrückt werden, während eine ortsabhängige Warnung weiterhin zugelassen werden würde.

Eine solche selektive Unterdrückung kann auch nur auf eine Seite angewendet werden. So kann, wie oben beschrieben, eine Unterdrückung der zeitabhängigen Warnung auf die Seite begrenzt werden, die der Seite gegenüberliegt, auf der in einer begrenzten vorausgegangenen Zeit bereits eine Warnung erfolgt ist. Dies hat den Vorteil, dass Warnungen in Folge der Reaktion des Fahrers auf eine vorherige Warnung unterdrückt werden, ein tatsächliches Überfahren der Linie aber aus Sicherheits- und Transparenzgründen nach wie vor zu einer Warnung führt.

Ein weiterer Unterdrückungsgrund, der ebenfalls richtungsabhängig ist, kann die Betätigung eines Blinkers sein. Diese kann über die Blinkhebelstellung erkannt werden. Wird beispielsweise der rechte Blinker betätigt, so werden nur Warnungen unterdrückt, die sich auf Geschehnisse beziehen, die auf der rechten Seite auftreten würden. Da der Fahrer durch Betätigen des Blinkers anzeigt, dass er das Fahrzeug in diese Richtung lenken will, ist eine Warnung bei einem Spurverlassen in dieser Richtung nicht notwendig. Diese richtungsabhängige Unterdrückung bringt aber auch noch weitere Vorteile mit sich. So kann die Anzahl an unterdrückten sinnvollen Warnungen reduziert werden, die erfolgen würde, wenn bei Betätigung des Blinkers die Warnungen auf beiden Seiten unterdrückt würden, ohne die Sicherheit zu mindern. Hat der Fahrer nämlich beispielsweise vergessen, den Blinker auszuschalten, so wird er zumindest auf einer Fahrspurseite weiterhin gewarnt. Zudem erhält der Fahrer bei einem gewollten Spurwechsel, bei dem er aus Versehen den Blinker in die falsche Richtung betätigt hat, eine Warnung. Da diese Situation durch die Fehlinformation des rückwärtigen Verkehrs durchaus kritisch sein kann, erscheint hier eine Warnung durchaus sinnvoll und angemessen.

Weiterhin kann eine Unterdrückung der Warnung bei einer Änderung der Fahrspurbreite erfolgen. Ändert sich die Fahrspurbreite innerhalb eines definierten Zeitraums oder innerhalb einer definierten Strecke um einen Betrag, der größer als ein vorgegebener Grenzwert ist, so kann die Warnung unterdrückt werden. Diese Unterdrückung ist sinnvoll, da es bei Fahrbahnverengungen, Fahrbahnaufweitungen oder dem kurzzeitigen Erkennen von falschen Spurmarkierungslinien, z.B. bei Ausfahrten, zu Fehlwarnungen kommen kann.

Schließlich können Warnungen unterdrückt werden, wenn die Position des Fahrzeugs zu bestimmten Stellen in der Umgebung des Fahrzeugs dies notwendig machen. Dies ist der Fall, wenn nach einer erfolgten LDW-Wamung der Abstand zwischen der Fahrzeugaußenkante und der Fahrspurmarkierung einen definierten Grenzwert unterschreitet oder das Fahrzeug die Spurmarkierung überfährt, wobei letzteres auch ohne vorherige Warnung geschehen kann. In diesem Fall sollte die Warnung unterdrückt werden, da andernfalls auch bei dem Vorgang des "sich wieder in die Spur Begebens" eine Warnung ausgegeben würde. Dies ist vom Fahrer in der Regel nicht gewünscht und wird als störend empfunden. Durch die ortsabhängige Unterdrückung der Warnung nach einer erfolgten Warnung kann dies vermieden werden.

Die Unterdrückung, die vor der Auslösung der Warnung erfolgt, d.h. die Vermeidung der Warnung, kann in eine Speichervorrichtung eingeschrieben werden. Vorzugsweise wird in diese Speichervorrichtung auch der Grund der Unterdrückung eingeschrieben. Diese Dokumentation der Unterdrückung kann im Falle eines Unfalls Auskunft darüber geben, ob das LDW-System funktionsfähig war.

Vorzugsweise wird beim Vorliegen eines Unterdrückungsgrunds eine Blockierung der Warnung automatisch ausgelöst, so dass ein aufwendiger Überprüfungsvorgang beim Erreichen des Schwellwerts durch einen der Ermittlungswerte nicht notwendig ist.

Liegen keine Unterbrechungsgründe vor, so wird die Warnung ausgelöst, d.h. ein optisches, akustisches oder haptisches Signal an den Fahrer gegeben und / oder eine Gegenmaßnahme, wie beispielsweise ein Gegenlenken, eingeleitet.

Auch das Ausführen von Warnungen kann in eine Speichervorrichtung eingeschrieben werden, die identisch mit der Speichervorrichtung sein kann, in die die Unterdrückung und die Unterdrückungsgründe eingeschrieben werden.

Auch während die Warnung ausgeführt wird, können Bedingungen auftreten, die eine Unterdrückung, in diesem Fall ein Unterbrechen der Warnung, notwendig machen.

Wird beispielsweise während einer begonnenen Warnung ein Eingriff eines anderen Fahrerassistenzsystems, wie eines ESP- oder ASR-Systems erkannt, so kann die Warnung unterbrochen werden. Wie oben bereits beschrieben, ist in einer solchen Situation von einem aufmerksamen Fahrer auszugehen und die Warnung könnte den Fahrer in dieser fahrdynamisch kritischen Situation ablenken.

Weiterhin wird eine Unterbrechung der Warnung vorgesehen werden, wenn eine definierte Maximaldauer der Warnung erreicht wurde. Vorzugsweise wird diese Maximaldauer individuell eingestellt. Diese Einstellung kann beispielsweise in Abhängigkeit der Ermittlungsart, aufgrund derer die Warnung erfolgt ist, geschehen.

Die Begrenzung der Maximaldauer hat den Vorteil, dass der Fahrer nicht durch zu lange Warnungen belästigt wird.

Auch bei einem Eingriff durch den Fahrer, z.B. durch Gegenlenken, kann die Warnung sofort unterbrochen werden. Im Vergleich zu einer konstanten Warndauer ergibt sich somit der Vorteil, dass der Fahrer durch unterschiedliche Warndauern bei unterschiedlich schnellen und effektiven Fahrerreaktionen eine positive Rückmeldung über seine Handlung erhält.

Es kann vorgesehen sein, eine Mindestdauer für die Warnung vorzugeben, um sicher zustellen, dass der Fahrer die Warnung wahrnimmt. Diese Mindestdauer kann aber verkürzt werden, wenn während dieser Zeit einer der Abbruchgründe auftritt, beispielsweise ein ESP-System eingreift.

Weiterhin kann die Dauer der Unterbrechung von dem LDW-System beeinflusst werden. So kann beispielsweise eine Warnunterbrechung, die durch die Betätigung des Blinkerhebels erfolgt ist, sofort aufgehoben werden, sobald ein Spurwechsel in Richtung des Blinkens erfolgt ist. Ist die Funktion "Autobahnblinken" aktiviert, d.h. eine Funktion, bei der ein Nachlaufen des Blinkers nach kurzem Antippen erfolgt, wird die Dauer der Warnunterdrückung verlängert. Nach einem gewollten und durch Blinken angekündigten Spurwechsel ist der Bedarf für die Warnunterdrückung nicht mehr gegeben. Der Fahrer erwartet, wenn er anschließend über eine Spurbegrenzung fährt, dass er eine Warnung erhält. Ist dies nicht der Fall, leidet die Systemtransparenz darunter. Andererseits darf eine Warnunterdrückung in Folge des Blinkens nicht sofort abgebrochen werden, wenn der Blinkerhebel zurückgesetzt wird. Viele Fahrer tippen den Blinker vor dem eigentlichen Spurenwechsel nur kurz an, so dass der Blinker beim eigentlichen Überfahren der Linie schon wieder deaktiviert ist. Für diesen Fall kann eine zusätzliche Überprüfung des tatsächlichen Überfahrens durchgeführt werden, bevor die Unterdrückung aufgehoben wird.

Weiterhin kann die Dauer der Unterdrückung der Warnung durch die Position des Kraftfahrzeugs auf der Spur beeinflusst werden. So kann nach einer erfolgten LDW-Warnung die Unterbrechung aufrecht erhalten werden bis sich das Fahrzeug wieder vollständig in der Fahrspur befindet und die Fahrzeugaußenkante einen Mindestabstand zu der Spurmarkierung besitzt. Dabei ist der Grenzwert für die Warnunterdrückung größer zu definieren als der Schwellwert, der für die ortsabhängige Warnauslösung eingestellt wird. Dies ergibt eine Hysterese zwischen der Wamauslösung und dem Ende der Warnunterdrückung. Außerdem kann es bei LDW-Systemen bei Fahrt entlang der Linie, z.B. im Vorfeld eines Überholvorgangs auf Landstraßen, zu einem gehäuften Auftreten von vom Fahrer ungewollten (aber prinzipiell berechtigten) Warnungen kommen. Durch die ortsabhängige Warnunterdrückung, bei der die Position des Fahrzeugs berücksichtigt wird (Hysterese zu der Warnauslösung) kann die Anzahl dieser ungewünschten Warnungen reduziert werden.

Die Dauer der Unterdrückung kann für die beiden Seiten der Fahrspurbegrenzung unterschiedlich eingestellt werden.

Auch die Beendigung einer Unterdrückung kann in die Speichervorrichtung, gegebenenfalls zusammen mit dem Grund für die Aufhebung der Unterdrückung, geschrieben werden.

In der Speichereinrichtung werden in der Regel die Daten in regelmäßigen Zeitabständen überschrieben, wobei die Dauer bis zum Überschreiben der Daten beispielsweise auf 30 Sekunden eingestellt werden kann. Durch diese Art des Einschreibens in die Speichervorrichtung kann sichergestellt werden, dass bei einem Unfall Angaben über die Geschehnisse in den letzten 30 Sekunden vor dem Unfall zur Verfügung stehen. Bevorzugt wird hierzu das Einschreiben in die Speichervorrichtung unterbrochen, sobald eine Schutzvorrichtung aktiviert wird. Dies kann beispielsweise der Airbag des Kraftfahrzeugs oder die Sperrvorrichtung für den Sicherheitsgurt sein.

Die Speichervorrichtung, die in einem separaten Gehäuse aufgenommen sein kann, kann eine Schnittstelle aufweisen, über die ein Auslesen der eingeschriebenen Daten ermöglicht wird.

Mit der vorliegenden Erfindung wird es somit möglich die Geschehnisse vor einem Unfall reproduzieren zu können und einen Rückschluss darüber zu erlauben, ob das Fahrerassistenzsystem zum Zeitpunkt des Unfalls funktionstüchtig war.

## Patentansprüche

1. Fahrerassistenzsystem, **dadurch gekennzeichnet, dass** Angaben über den Zustand des Fahrerassistenzsystems in eine Speichervorrichtung (2) eingeschrieben werden und zusätzlich der Zustand von zumindest einer Schutzvorrichtung (3) in dem Kraftfahrzeug überwacht wird.

2. Fahrerassistenzsystem nach Anspruch 1, **dadurch gekennzeichnet, dass** Angaben über den Zustand der Schutzvorrichtung (3) zur Steuerung des Einschreibens des Zustands des Fahrerassistenzsystems in die Speichervorrichtung (2) verwendet werden.

3. Fahrerassistenzsystem nach einem der Ansprüche 1 oder 2, **dadurch gekennzeichnet, dass** beim Erkennen eines vorbestimmten Zustands der Schutzvorrichtung (3) das Einschreiben der Angaben über den Zustand des Fahrerassistenzsystems in die Speichervorrichtung (2) unterbrochen wird.

4. Fahrerassistenzsystem nach Anspruch 3, **dadurch gekennzeichnet, dass** der vorbestimmte Zustand das Aktivieren der Schutzvorrichtung (3) darstellt.

5. Fahrerassistenzsystem nach einem der Ansprüche 1 bis 4, **dadurch gekennzeichnet, dass** die Angaben über den Zustand der Schutzvorrichtung (3) in die Speichervorrichtung (2) eingeschrieben werden.

6. Fahrerassistenzsystem nach einem der Ansprüche 1 bis 5, **dadurch gekennzeichnet, dass** die Angaben über den Zustand des Fahrerassistenzsystems in vorbestimmten Abständen mit aktuellen Angaben über den Zustand des Fahrerassistenzsystems überschrieben werden.

7. Fahrerassistenzsystem nach einem der Ansprüche 1 bis 6, **dadurch gekennzeichnet, dass** die Angaben über den Zustand des Fahrerassistenzsystems zumindest die Angaben über die Aktivierung und/oder Unterdrückung einer Warnung umfassen.

8. Fahrerassistenzsystem nach einem der Ansprüche 1 bis 7, **dadurch gekennzeichnet, dass** das Fahrerassistenzsystem zur Unterstützung der Spurhaltung dient.

9. Vorrichtung zum Betreiben eines Fahrerassistenzsystems für Kraftfahrzeuge, **dadurch gekennzeichnet, dass** diese zumindest eine Speichervorrichtung (2) zur Speicherung des Zustands des Fahrerassistenzsystems aufweist und die Speichervorrichtung (2) mit einer Schutzvorrichtung (3) in dem Kraftfahrzeug verbunden ist.

10. Vorrichtung nach Anspruch 9, **dadurch gekennzeichnet, dass** die Verbindung mit der Schutzvorrichtung (3) über zumindest eine Steuereinheit verläuft.

11. Vorrichtung nach Anspruch 9 oder 10, **dadurch gekennzeichnet, dass** die Verbindung zu der Schutzvorrichtung (3) zur Steuerung des Einschreibens von Angaben über den Zustand des Fahrerassistenzsystems in die Speichervorrichtung (2) dient.

12. Vorrichtung nach einem der Ansprüche 9 bis 11, **dadurch gekennzeichnet, dass** die Verbindung zu der Schutzvorrichtung (3) dem Einschreiben von Angaben über den Zustand der Schutzvorrichtung (3) in die Speichervorrichtung (2) dient.

13. Vorrichtung nach einem der Ansprüche 9 bis 12, **dadurch gekennzeichnet, dass** die Speichervorrichtung (2) ein von dem Fahrerassistenzsystem separates Bauteil darstellt, das zumindest eine Schnittstelle zum Auslesen der gespeicherten Daten aufweist.

14. Vorrichtung nach einem der Ansprüche 9 bis 13, **dadurch gekennzeichnet, dass** die Speichervorrichtung (2) wiederbeschreibbar ist.

15. Vorrichtung nach einem der Ansprüche 9 bis 14, **dadurch gekennzeichnet, dass** die Schutzvorrichtung (3) einen Airbag des Kraftfahrzeugs darstellt.

16. Vorrichtung nach einem der Ansprüche 9 bis 15, **dadurch gekennzeichnet, dass** das Fahrerassistenzsystem der Unterstützung der Spurhaltung dient.
